# EUROPÄISCHE PATENTSCHRIFT

(11) **EP 3 594 597 B1**
(45) Veröffentlichungstag und Bekanntmachung des Hinweises auf die Patenterteilung: **19.01.2022**
(21) Anmeldenummer: 18182601.7
(22) Anmeldetag: 10.07.2018
(51) Int. Cl.: F27B 7/20, C04B 7/36, C04B 7/43

(54) **VERFAHREN ZUM KONTROLLIEREN EINES SCHWEFEL-, HALOGEN- UND/ODER ALKALIEN-KREISLAUFS UND VORRICHTUNG ZUM HERSTELLEN VON ZEMENTKLINKER AUS EINEM KALZINIERTEN ROHMEHL**
METHOD FOR CONTROLLING A SULPHUR, HALOGEN AND/OR ALKALINE CIRCUIT AND DEVICE FOR PRODUCING CEMENT CLINKERS FROM A CALCINED RAW MEAL
PROCÉDÉ DE COMMANDE DE CIRCUIT SOUFRE, HALOGÈNE ET / OU ALCALIS ET DISPOSITIF DE FABRICATION DE CLINKER DE CIMENT À PARTIR D'UNE FARINE CRUE CALCINÉE

(43) Veröffentlichungstag der Anmeldung: 15.01.2020
(73) Patentinhaber: Universität Stuttgart, 70174 Stuttgart (DE)
(72) Erfinder: Spörl, Reinhold, 70197 Stuttgart (DE); Hornberger, Matthias, 70182 Stuttgart (DE)
(74) Vertreter: Ege Lee & Partner Patentanwälte PartGmbB

(56) Entgegenhaltungen:
- EP-A1- 2 559 472
- EP-A1- 2 952 244
- WO-A1-2007/116084
- US-A1- 2011 061 569
- US-A1- 2011 126 738
- US-B2- 8 021 479
- SPINELLI M ET AL: "Integration of Ca-Looping Systems for CO2Capture in Cement Plants", ENERGY PROCEDIA, ELSEVIER, NL, Bd. 114, 18. August 2017 (2017-08-18), Seiten 6206-6214, XP085178229, ISSN: 1876-6102, DOI: 10.1016/J.EGYPRO.2017.03.1758

## Beschreibung

Die Erfindung betrifft ein Verfahren zum Kontrollieren eines Schwefel-, Halogen- und/oder Alkalien-Kreislaufs bei einem Herstellen von Zementklinker aus einem kalzinierten Rohmehl in einem Ofen unter Bildung von Rauchgas, wobei in Rohmehl enthaltenes CaCO₃ in einem Kalzinator unter Abscheidung von konzentriertem CO₂ zu CaO umgewandelt wird, um kalziniertes Rohmehl zu erhalten, eine erste Teilmenge von kalziniertem Rohmehl in den Ofen überführt wird, CaO aus einer zweiten Teilmenge von kalziniertem Rohmehl in einem Karbonator unter Reaktion mit in dem Rauchgas enthaltenen CO₂ wieder zu CaCO₃ umgewandelt wird und CaCO₃ aus dem Karbonator in den Kalzinator überführt wird. Außerdem betrifft die Erfindung eine Vorrichtung zum Herstellen von Zementklinker aus einem kalzinierten Rohmehl unter Anwendung eines derartigen Verfahrens.

Zur Herstellung von Zementklinker wird in einem Produktionsprozess Rohmehl, auch als Ofenmehl bezeichnet, vorgewärmt, kalziniert und nachfolgend in einem Ofen, insbesondere Drehrohrofen, bei hohen Temperaturen zu Zementklinker umgewandelt. Zementklinker dient als Grundstoff zur Herstellung von Zement. Der Prozess ist sehr energieintensiv und setzt durch die Verbrennung im Ofen und in einem Kalzinator, sowie durch eine Kalzinierung von CaCO₃-haltigem Rohmehl große Mengen an CO₂ frei. Aus diesem konventionellen Zementklinker-Produktionsprozess ist bekannt, dass Verbindungen bestimmter Elemente, insbesondere Schwefel, beispielsweise in Form von SO₂, aber auch Chlor, beispielsweise in Form von HCl, und andere Halogene, wie F, Br und I, und der Alkalien Kalium und Natrium Stoffkreisläufe bilden, bei denen diese Elemente zyklisch durch die hohen Temperaturen im Ofen in die Gasphase freigesetzt werden. Bei Abkühlung der heißen Rauchgase im Kalzinator und in einem Rohmehl-Vorwärmer werden die genannten Elemente wieder in den Feststoff, das zumindest teilweise kalzinierte Rohmehl, eingebunden. Mit diesem Feststoff werden diese Elemente nun wiederum in den Ofen überführt, wo sie abermals freigesetzt werden. Da auf Grund der beschriebenen Vorgänge die genannten Elemente den Zementklinker-Produktionsprozess nicht bzw. nur eingeschränkt verlassen können, reichern sie sich an. Es können dadurch sehr hohe Beladungen an Schwefel, Chlor und Alkalien entstehen, welche mitunter für Probleme im Anlagenbetrieb verantwortlich sind. Um die Beladungen an diesen Elementen in den jeweiligen Stoffkreisläufen zu kontrollieren, wird in konventionellen Zementklinker-Produktionsanlagen ein Teilstrom des Rauchgases nach dem Ofen abgezogen, um über einen Bypass der genannten Elemente diese aus den Stoffkreisläufen gezielt abzuführen. Informationen zu Stoffkreisläufen in konventionellen Zementklinker-Produktionsprozessen finden sich beispielsweise in Kapitel 6.3 der Veröffentlichung F. W. Locher, Zement: Grundlagen der Herstellung und Verwendung, 1st ed., Verlag Bau+Technik, s.I. 2015.

Es besteht ein Bedürfnis, die CO₂-Emissionen in Zementklinker-Produktionsprozessen zu senken. Eine vielversprechende Methode hierzu ist der Einsatz von Verfahren zur CO₂-Abscheidung, insbesondere des Calcium-Looping-Verfahrens. Dieses nutzt eine zyklische Karbonatisierung und Kalzinierung von CaCO₃-haltigen Feststoffen für die Einbindung und Abscheidung von CO₂, indem CaCO₃, welches im Rohmehl enthalten ist, im Kalzinator zu CaO umgewandelt/kalziniert wird, wobei CO₂ freigesetzt wird. Die für diese endotherme Reaktion benötigte Wärme wird durch Verbrennung eines Brennstoffs mit reinem Sauerstoff, auch als Oxy-fuel-Verbrennung bezeichnet, bereitgestellt. Das Abgas des Kalzinators besteht durch die Oxy-fuel-Verbrennung zu großen Teilen aus CO₂ und kann gespeichert oder unmittelbar genutzt werden. Das im Kalzinator erzeugte CaO wird nun in einen Karbonator überführt. Im Karbonator reagiert es mit dem CO₂, welches im Rauchgas aus dem Ofen enthalten ist, wobei wiederum CaCO₃ entsteht, welches zurück in den Kalzinator geführt wird. Hier wird es wiederum kalziniert. Ein Teil des kalzinierten Rohmehls wird direkt dem Ofen zugeführt und dient als Ausgangstoff für den Klinkerbrennprozess, welcher in diesem Aggregat abläuft. Weitere Informationen zu diesem Prozess finden sich beispielsweise in den Veröffentlichungen M. C. Romano et al., The Calcium Looping Process for Low CO2 Emission Cement Plants, Energy Procedia 2014, 61, pp. 500-503 und M. Spinelli et al., Integration of Ca-Looping Systems for CO 2 Capture in Cement Plants, Energy Procedia 2017, 114, pp. 6206-6214.

Insbesondere durch Nutzung der Kalzinierung von CaCO₃ aus dem Rohmehl im Calcium-Looping-Prozess wie auch bei der Herstellung von Zementklinker ergeben sich Vorteile für eine Integration der beiden Verfahren. Diese Kombination des Calcium-Looping-Verfahrens in den Rohmehl-Kalzinierungsprozess der Klinkerproduktion ist auf Grund der Prozesskosten und des Energiebedarfs sehr vielversprechend und hat großes Potential für eine Anwendung zur Dekarbonisierung im Bereich der Zementindustrie. Dieses integrierte Calcium-Looping-Verfahren ist Gegenstand der Veröffentlichungen ITMI20120382 A1 und ITMI20120383 A1.

Das Dokument EP 2 952 244 A1 betrifft ein Kohlenstoffabscheidesystem, umfassend einen Karbonator zum Adsorbieren von Kohlendioxid mit einem kohlendioxidarmen Sorptionsmittel, das ein kohlendioxidreiches Sorptionsmittel erzeugt, einen ersten Kalzinator zum thermischen Zersetzen eines kohlendioxidreichen Sorptionsmittels in ein kohlendioxidarmes Sorptionsmittel und Kohlendioxid, eine Zufuhr von Rohmaterial, das in den ersten Kalzinator kalziniert werden soll, wobei das Rohmaterial ein kohlendioxidreiches Sorptionsmittel enthält, und eine Verbindung zwischen dem ersten Kalzinator und dem Karbonator zum Überführen mindestens des kohlendioxidarmen Sorptionsmittels in den Karbonator. Dem Dokument EP 2 952 244 A1 zufolge wird vorgeschlagen, dass das Kohlenstoffabscheidesystem ferner einen zweiten Kalzinator zur thermischen Zersetzung eines kohlendioxidreichen Sorptionsmittels in ein kohlendioxidarmes Sorptionsmittel und Kohlendioxid, eine Verbindung zwischen dem Karbonator und dem zweiten Kalzinator zur Übertragung von mindestens kohlendioxidreichem Sorptionsmittel zu dem zweiten Kalzinator, und eine Verbindung zwischen dem zweiten Kalzinator und dem Karbonator zur Übertragung von kohlendioxidarmem Sorptionsmittel (CaO) zu dem Carbonator umfasst.

Aus dem Dokument EP 2 559 472 A1 ist ein Verfahren bekannt zum Abscheiden von Kohlendioxid aus einem kohlendioxidreichen Abgasstrom, der in einem Zementofen erzeugt wird, wobei das Verfahren die Rückführung des kohlendioxidreichen Abgasstroms zu einer Einheit zur Kanonisierung umfasst.

Die Veröffentlichung SPINELLI M ET AL, "Integration of Ca-Looping Systems for CO2Capture in Cement Plants", ENERGY PROCEDIA, ELSEVIER, NL, (20170818), vol. 114, doi:10.1016/J.EGYPRO.2017.03.1758, betrifft die Integration von Ca-Looping-Systemen zur CO₂-Abscheidung in Zementwerken. Es werden zwei Möglichkeiten der Prozessintegration des CaL-Systems auf der Basis von Wirbelschicht- und Flugstromreaktoren in einem Klinkerbrennprozess zu untersucht. Die Hauptvorteile, Randbedingungen und Forschungsfragen der beiden Konfigurationen werden diskutiert, und die Massen- und Energiebilanzen der gesamten Prozesse werden detailliert und analysiert. Die Prozessintegration des Calcium-Looping-Prozesses in Zementwerken wird diskutiert, wobei zwei verschiedene Integrationsstufen und verschiedene Reaktortypen verglichen werden. Der erste betrachtete Integrationsansatz ist die Tail-End-Konfiguration, die auf CFB-Calcium-Looping-Reaktoren basiert. Der zweite betrachtete Ansatz ist ein hochintegriertes System, das auf Flugstrom-Cal-Reaktoren basiert, die eng in den Rohmehlvorwärmer des Zementofens integriert sind.

Aus dem Dokument US 2011/0126738 A1 ist ein Verfahren bekannt zum Betrieb eines Zementwerkes, wobei das Rohmehl in einer Vorwärmzone vorgewärmt, das vorgewärmte Material in einer Kalzinierzone vorkalziniert und das vorkalzinierte Material schließlich in einer Sinterzone gesintert wird. Das Zementwerk wird so betrieben, dass das vorkalzinierte Material, das der Sinterzone zugeführt wird, eine SO³-Konzentration von mindestens 5,5% Massenkonzentration und einen CaSO₄-Anteil von mindestens 75%, vorzugsweise 90%, des Gesamtsalzgehaltes aufweist.

Das Dokument US 8,021,479 B2 betrifft eine Vorrichtung und ein Verfahren zur Herstellung von Klinker aus Zementrohmaterial. Dem Dokument US 8,021,479 B2 zufolge wird das Zementrohmaterial in einem Vorwärmer vorgewärmt, in einer Kalziniervorrichtung vorkalziniert, in einem Sinterofen vollständig gebrannt und schließlich in einem Kühler abgekühlt. Die Tertiärluft des Kühlers wird der Kalziniervorrichtung zugeführt, während der abgeschiedene Staub in einem Staubverbrennungsreaktor mit Hilfe von Verbrennungsluft und Brennstoff thermisch behandelt wird. Zumindest ein Teil der Tertiärluft wird dem Staubverbrennungsreaktor als Verbrennungsluft zugeführt, während der zu behandelnde Staub und die Verbrennungsluft in gleicher Strömungsrichtung in den Staubverbrennungsreaktor eindringen.

Das Dokument WO 2007/116084 A1 betrifft ein Verfahren und eine Vorrichtung zum Einführen von Rohmehl und Festbrennstoff in einen Kalzinator. Dem Dokument WO 2007/116084 A1 zufolge wird Rohmehl in den Kalzinator einer Anlage zur Herstellung von Zementklinker eingeführt, wobei das Rohmehl mittels eines Gasstroms pneumatisch in den Kalzinator gefördert wird. Der Gasstrom wird etwa waagrecht in den Kalzinator eingeleitet. Der Gasstrom wird mit möglichst geringem Strömungswiderstand in den Kalzinator geleitet. Festbrennstoff wird pneumatisch mittels eines Förderluftstroms über einen Rohmehlaufgabekasten in den Kalzinator gefördert. Der Gasstrom, der das Rohmehl in den Kalzinator fördert, ist der Förderluftstrom des Brennstoffs, und der Förderluftstrom wird parallel zu den Seitenwänden des Rohmehlaufgabekastens geführt. Die Vorrichtung dazu weist einen Mehlaufgabekasten mit einer Mehlrutsche auf, wobei die Brennstoff-Förderleitung etwa waagerecht von hinten in die Mehlrutsche mündet.

Das Dokument US 2011/0061569 A1 betrifft ein Verfahren zur Herstellung eines Zementklinkers mit einem Drehofen, einem Zyklonvorwärmer, der die Rauchgase aus dem Drehofen empfängt, einem luftblasenden Klinkerkühler und mindestens einem Wärmetauscher, der als erster Wärmetauscher bezeichnet wird. Dem Dokument US 2011/0061569 A1 zufolge werden die Rohmaterialien in dem Zyklonvorwärmer vorgewärmt und entkarbonisiert. Der Klinker wird in dem Klinkerkühler gekühlt. Ein erster Teil der vom Klinkerkühler erzeugten Heißluft, die so genannte Sekundärluft, wird dem Drehrohrofen zugeführt, um als Verbrennungsluft verwendet zu werden. Ein zweiter Teil der erzeugten Heißluft, die so genannte Tertiärluft, wird separat vom ersten Teil zu einem Ort in der Anlage geleitet und gefördert, an dem der Brennstoff verbrannt wird. Ein dritter Teil der in diesem Klinkerkühler erzeugten Heißluft, oder sogenannte Überschussluft, wird in mindestens den ersten Wärmetauscher geleitet, um Energie zur Erzeugung von Elektrizität zurückzugewinnen.

Der Erfindung liegt die Aufgabe zugrunde, ein eingangs genanntes Verfahren zu verbessern. Außerdem liegt der Erfindung die Aufgabe zugrunde, eine eingangs genannte Vorrichtung baulich und/oder funktional zu verbessern.

Die Aufgabe wird gelöst mit einem Verfahren mit den Merkmalen des Anspruchs 1. Außerdem wir die Aufgabe gelöst mit einer Vorrichtung mit den Merkmalen des Anspruchs 8.

Vorteilhafte Ausführungen und Weiterbildungen sind Gegenstand der Unteransprüche.

Das Projekt, das zu der vorliegenden Anmeldung geführt hat, hat Finanzmittel aus dem Horizon 2020 Forschungs- und Innovationsprogramm der Europäischen Union unter den Bewilligungsvereinbarungen Nr. 764816 und 641185 erhalten. Das Verfahren kann insbesondere dazu dienen, ein Anreichern von Schwefel-, Halogen- und/oder Alkalien zu begrenzen und/oder zu reduzieren. Das Verfahren kann außerdem zum Kontrollieren eines Blei-, Zink-, Cadmiuim-, und/oder Thallium-Kreislaufs dienen, um ein Anreichern auch dieser Elemente zu begrenzen und/oder zu reduzieren.

Ungebranntes Rohmehl kann im Wesentlichen Calciumcarbonat (CaCO₃) enthalten. Ungebranntes Rohmehl wird im Kalzinator gebrannt, um Kohlendioxid (CO₂) auszutreiben und Calciumoxid (CaO) zu bilden. Gebranntes Rohmehl kann auch als kalziniertes Rohmehl bezeichnet werden. Ungebranntes Rohmehl kann auch als nicht kalziniertes Rohmehl bezeichnet werden. Ein Brennen oder Kalzinieren kann in einem Oxy-fuel befeuerten Kalzinator bei einer Temperatur von ca. 870°C bis ca. 970°C, insbesondere von ca. 900°C bis ca. 920°C, erfolgen. Nach einem Brennen oder Kalzinieren kann kalziniertes Rohmehl im Ofen gesintert werden. Ein Sintern kann bei einer Temperatur von ca. 1.350°C bis ca. 1.500°C, insbesondere von ca. 1.400°C bis ca. 1.450°C, erfolgen. Beim Sintern werden Klinkerphasen gebildet. Rauchgas kann beim Brennen oder Kalzinieren und/oder beim Sintern entstehen.

Vorliegend können sich die Bezeichnungen Schwefel, Halogene und/oder Alkalien sowohl auf diese Elemente als solche als auch in Verbindung mit anderen Elementen beziehen. Ein Halogen kann insbesondere Chlor sein. Andere Halogene können beispielsweise F, Br, I, sein. Alkalien können insbesondere Kalium und/oder Natrium sein.

Im Kalzinator abgeschiedenes CO₂ kann gespeichert und/oder unmittelbar verwertet werden. Der Karbonator kann dazu dienen, CO₂-Emissionen zu reduzieren. Im Karbonator wird ein CO₂-Gehalt des Rauchgases reduziert.

Schwefel, Halogene und/oder Alkalien aus dem Rauchgas können reaktiv und/oder physikalisch in dem kalzinierten Rohmehl gebunden werden. Gasförmige Schwefel-, Halogen- und/oder Alkalien-Verbindungen aus dem Rauchgas können in dem kalzinierten Rohmehl eingebunden werden und/oder auf ihm kondensieren.

Kalziniertes Rohmehl und Rauchgas werden in einer Abscheidevorrichtung miteinander in Kontakt gebracht. Der Schwefel-, Halogen- und/oder Alkalien-Kreislauf kann sich innerhalb der Abscheidevorrichtung ausbilden. Der Kalzinator und/oder der Karbonator können außerhalb des Schwefel-, Halogen- und/oder Alkalien-Kreislaufs gehalten werden.

Der Kontakt zwischen kalziniertem Rohmehl und Rauchgas kann mechanisch, zeitlich und/oder thermisch intensiviert werden, um ein Binden und/oder Kondensieren von Schwefel, Halogenen und/oder Alkalien aus Rauchgas in kalziniertem Rohmehl zu unterstützen.

Kalzinertes Rohmehl kann vor dem Kontakt mit Rauchgas auf ca. 500°C bis ca. 900°C, insbesondere auf ca. 650°C bis ca. 850°C, temperiert werden. Rauchgas kann vor dem Kontakt mit kalziniertem Rohmehl auf ca. 550°C bis ca. 750°C, insbesondere auf ca. 700°C, temperiert werden. Rauchgas kann vor dem Kontakt mit kalziniertem Rohmehl durch Zugabe von kaltem oder heißem Rohmehl temperiert werden. Rauchgas kann vor dem Kontakt mit kalziniertem Rohmehl durch Zugabe von kalziniertem oder nicht kalziniertem Rohmehl temperiert werden.

Mit Schwefel, Halogenen und/oder Alkalien beladenes kalziniertes Rohmehl kann aus Rauchgas abgeschieden und dem Ofen zugeführt werden.

Eine Teilmenge von mit Schwefel, Halogenen und/oder Alkalien beladenem Rauchgas kann vor dem Kontakt mit kalziniertem Rohmehl abgezogen werden. Eine Teilmenge von mit Schwefel, Halogenen und/oder Alkalien beladenem kalzinertem Rohmehl kann nach dem Kontakt mit Rauchgas abgezogen wird. Damit kann/können Schwefel, Halogene und/oder Alkalien aus dem Schwefel-, Halogen- und/oder Alkalien-Kreislauf entfernt werden.

Der Ofen kann ein Drehrohrofen sein. Der Drehrohrofen kann eine Brennstoff- und Luftzufuhr aufweisen. Der Kalzinator kann eine Brennstoff- und Sauerstoffzufuhr aufweisen. Die Abscheidevorrichtung weist einen ofenseitigen Rauchgaseinlass, einen karbonatorseitig ersten Rauchgasauslass, einen Rohmehleinlass für die erste Teilmenge von kalziniertem Rohmehl und einen ofenseitigen ersten Rohmehlauslass auf.

Die Abscheidevorrichtung kann wenigstens einen weiteren Rohmehleinlass für kaltes und/oder nicht kalziniertes Rohmehl aufweisen. Die Vorrichtung kann zwischen dem Kalzinator und dem Rohmehleinlass eine erste Leitung aufweisen. Die Vorrichtung kann zwischen dem Kalzinator und dem Karbonator eine zweite Leitung aufweisen. Die Vorrichtung kann zwischen dem Ofen und der Abscheidevorrichtung eine dritte Leitung aufweisen. Die Vorrichtung kann zwischen der Abscheidevorrichtung und dem Karbonator eine vierte Leitung aufweisen. Die Vorrichtung kann zwischen der Abscheidevorrichtung und dem Ofen eine fünfte Leitung aufweisen. Die erste Leitung, die zweite Leitung, die dritte Leitung, die vierte Leitung und/oder die fünfte Leitung können/kann als Steigleitung ausgeführt sein.

Die Abscheidevorrichtung kann einen ersten Fliehkraftabscheider aufweisen. Der erste Fliehkraftabscheider kann einen axialen Gasausgang, einen axialen Feststoffausgang und einen tangentialen Gas-Feststoff-Eingang aufweisen. Der Gasausgang kann nach oben und der Feststoffausgang kann nach unten gerichtet sein. Die Abscheidevorrichtung kann einen zweiten Fliehkraftabscheider aufweisen. Der zweite Fliehkraftabscheider kann einen axialen Gasausgang, einen axialen Feststoffausgang und einen tangentialen Gas-Feststoff-Eingang aufweisen. Der Gasausgang kann nach oben und der Feststoffausgang kann nach unten gerichtet sein. Der erste Fliehkraftabscheider und/oder der zweite Fliehkraftabscheider können/kann auch als Zyklonabscheider bezeichnet werden. Die Bezeichnungen Gasausgang, Feststoffausgang und Gas-Feststoff-Eingang beziehen sich vorliegend auf den überwiegend strömenden Stoff bzw. Aggregatszustand und die überwiegende Strömungsrichtung ohne auszuschließen, dass durch den jeweiligen Eingang bzw. Ausgang zeitweise oder teilweise auch ein anderer Stoff bzw. Aggregatszustand strömt oder eine andere Strömungsrichtung vorliegt.

Der erste Fliehkraftabscheider kann zwischen dem Rauchgaseinlass einerseits und dem Rohmehlauslass und dem zweiten Fliehkraftabscheider andererseits wirksam sein. Der zweite Fliehkraftabscheider kann zwischen dem ersten Fliehkraftabscheider einerseits und dem Rauchgaseinlass und dem Rauchgasauslass andererseits wirksam sein. Der zweite Fliehkraftabscheider kann zwischen dem ersten Fliehkraftabscheider einerseits und dem Rohmehlauslass und dem Rauchgasauslass andererseits wirksam sein.

Der Rohmehleinlass kann zwischen dem Rauchgaseinlass und dem ersten Fliehkraftabscheider angeordnet sein. Der weitere Rohmehleinlass kann zwischen dem Rauchgaseinlass und dem ersten Fliehkraftabscheider angeordnet sein. Der weitere Rohmehleinlass kann zwischen dem ersten Fliehkraftabscheider und dem zweiten Fliehkraftabscheider angeordnet sein.

Die Abscheidevorrichtung kann wenigstens einen Rohmehleinlaufkasten aufweisen. Der wenigstens eine Rohmehleinlaufkasten kann dazu dienen, zugeführtes Rohmehl zu verteilen. Der wenigstens eine Rohmehleinlaufkasten kann dazu dienen, zugeführtes Rohmehl möglichst gleichmäßig über einen Leitungsquerschnitt zu verteilen. Der wenigstens eine Rohmehleinlaufkasten kann an dem Rohmehleinlass wirksam sein. Der wenigstens eine Rohmehleinlaufkasten kann vor dem Gas-Feststoff-Eingang des ersten Fliehkraftabscheiders wirksam sein.

Die Vorrichtung kann eine Temperiervorrichtung zum Temperieren von kalzinertem Rohmehl vor dem Kontakt mit Rauchgas aufweisen. Die Temperiervorrichtung kann an der ersten Leitung wirksam sein. Die Temperiervorrichtung zwischen dem ersten Fliehkraftabscheiderund dem zweiten Fliehkraftabscheiderwirksam sein. Die Vorrichtung kann eine Temperiervorrichtung zum Temperieren von Rauchgas vor dem Kontakt mit kalziniertem Rohmehl aufweisen. Der weitere Rohmehleinlass kann zur Temperiervorrichtung gehören.

Die Abscheidevorrichtung kann einen zweiten Rauchgasauslass aufweisen. Der zweite Rauchgasauslass kann dazu dienen, eine Teilmenge von mit Schwefel, Halogenen und/oder Alkalien beladenem Rauchgas vor dem Kontakt mit kalzinertem Rohmehl abzuziehen. Die Abscheidevorrichtung kann einen zweiten Rohmehlauslass aufweisen. Der zweite Rohmehlauslass kann dazu dienen, eine Teilmenge von mit Schwefel, Halogenen und/oder Alkalien beladenem kalzinertem Rohmehl nach dem Kontakt mit Rauchgas abzuziehen. Damit kann/können Schwefel, Halogene und/oder Alkalien aus dem Schwefel-, Halogen- und/oder Alkalien-Kreislauf entfernt werden.

Zusammenfassend und mit anderen Worten dargestellt ergibt sich somit durch die Erfindung unter anderem ein Verfahren zur Kontrolle von Schwefel-, Chlor- und Alkali-Kreisläufen in Zementklinker-Produktionsanlagen mit Calcium-Looping-CO₂-Abscheidung.

Ein Teil von kalziniertem Rohmehl aus dem Kalzinator kann einem Drehrohrofen für eine Klinkerproduktion zugeführt werden. Die Überführung des Rohmehls kann nun so gestaltet werden, dass ein Kontakt zwischen dem kalzinierten Rohmehl und heißen Rauchgasen aus dem Drehrohrofen auf einem geeigneten Temperaturniveau maximiert wird. Hierdurch wird erreicht, dass Cl, S und Alkalien aus dem Rauchgas in das kalzinierte Rohmehl eingebunden werden können, insbesondere indem gasförmige S- und Cl-Verbindungen mit festen oder flüssigen Ca- und Akaliverbindungen im Rohmehl reagieren bzw. gasförmige Alkaliverbindungen aus dem Drehrohrofen-Rauchgas auf ihm kondensieren, bevor das Rauchgas in einen Karbonator eines Calcium-Looping-Prozesses eintritt. Vor Eintritt der Rauchgase aus dem Drehrohrofen in den Karbonator kann das kalzinierte Rohmehl zusammen mit den abgeschiedenen Komponenten mit Hilfe von Zyklonen aus diesem Gasstrom abgeschieden und das abgeschiedene Rohmehl dann dem Drehrohrofen zugeführt werden.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Mit der Erfindung werden CO₂-Emissionen reduziert. Ein für eine Reaktion mit CO₂ verfügbarer Anteil an reaktivem CaO im kalzinierten Rohmehl wird erhöht. Eine negative Beeinflussung eines CaO-reichen Sorbens wird reduziert. Ein Schwefel-, Halogen- und/oder Alkalien-Kreislauf wird verbessert. Ein Abführen von Schwefel, Halogenen und/oder Alkalien aus dem Schwefel-, Halogen- und/oder Alkalien-Kreislauf wird ermöglicht. Eine Prozessqualität und/oder Prozesseffizienz wird erhöht. Ein Aufwand, wie Zeit- und/oder Kostenaufwand, wird reduziert. Negative Einwirkungen durch Schwefel, Halogenen und/oder Alkalien auf die Vorrichtung, wie Korrosion, Belagbildung und/oder Verschmutzung, werden reduziert oder vermieden. Ein Energiebedarf wird reduziert.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: einen integrierten Calcium-Looping-Prozess zur CO₂-Abscheidung aus einem Zementklinker-Produktionsprozess mit Kontrolle und Minimierung eines Eintrags von Schwefel-, Halogen- und/oder Alkali-Verbindungen in einen Karbonator-Kalzinator-Kreislauf,
- Fig. 2: eine Abscheidevorrichtung für Schwefel-, Halogen- und/oder Alkali-Verbindungen vor einem Karbonator-Kalzinator-Kreislauf mit Einbringung von kalziniertem Rohmehl aus einem Kalzinator zusammen mit rückgeführten Rohmehl aus einem Zyklon vor Karbonator in eine Steigleitung,
- Fig. 3: eine Abscheidevorrichtung für Schwefel-, Halogen- und/oder Alkali-Verbindungen vor einem Karbonator-Kalzinator-Kreislauf mit voneinander gesonderter Einbringung von kalziniertem Rohmehl aus einem Kalzinator zusammen und rückgeführten Rohmehl aus einem Zyklon vor Karbonator in eine Steigleitung,
- Fig. 4: eine Abscheidevorrichtung für Schwefel-, Halogen- und/oder Alkali-Verbindungen vor einem Karbonator-Kalzinator-Kreislauf mit Einbringung von kalziniertem Rohmehl aus einem Kalzinator zusammen mit rückgeführten Rohmehl aus einem Zyklon vor Karbonator in eine Steigleitung und Zugabe von kaltem nicht kalzinierten Rohmehl zur Temperierung und
- Fig. 5: eine Abscheidevorrichtung für Schwefel-, Halogen- und/oder Alkali-Verbindungen vor einem Karbonator-Kalzinator-Kreislauf mit Einbringung von kalziniertem Rohmehl aus einem Kalzinator in eine Steigleitung zur Temperierung ohne Rohmehl-Rückführung in die Abscheidevorrichtung.

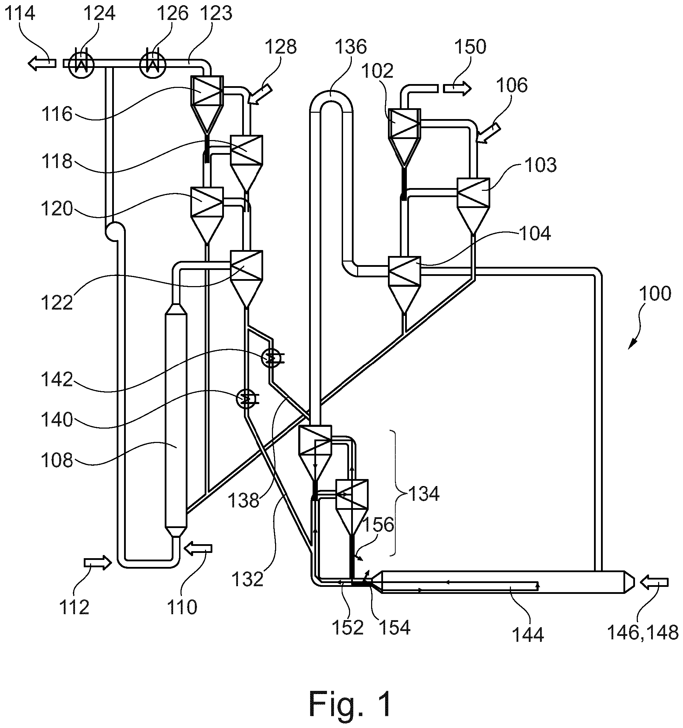

Fig. 1 zeigt einen integrierten Calcium-Looping-Prozess 100 zur CO₂-Abscheidung aus einem Zementklinker-Produktionsprozess mit Kontrolle und Minimierung eines Eintrags von Schwefel-, Halogen- und/oder Alkali-Verbindungen in einen Karbonator-Kalzinator-Kreislauf.

Über eine Kaskade von Zyklonabscheidern 102, 103, 104 wird nicht kalziniertes Rohmehl 106 einem Kalzinator 108 zugeführt und in dem Kalzinator 108 mithilfe von Brennstoff 110 und technisch reinem Sauerstoff 112 gebrannt, um kalziniertes Rohmehl herzustellen. Dabei entstehende Abgase, die in trockenem Zustand ca. 85 bis ca. 90 vol.-% CO₂, in feuchten Zustand noch ca. 10 bis 15 % Wasserdampf und N₂, Ar, O₂ im Rest enthalten, werden über eine Kaskade von Zyklonabscheidern 116, 118, 120, 122 und eine Leitung 123 zur weiteren Behandlung abgeleitet. An der Leitung 123 sind Temperiervorrichtungen 124, 126 wirksam. Im Bereich der Zyklonabscheider 116, 118, 120, 122 kann eine Zugabe von kaltem nicht kalziniertem Rohmehl 128 erfolgen.

Eine erste Teilmenge von kalziniertem Rohmehl wird über den Zyklonabscheider 122 und eine Leitung 132 einer Abscheidevorrichtung 134 zugeführt, um SO₂, HCl und Alkalien vor einem Karbonator 136 abzuscheiden. Eine zweite Teilmenge von kalziniertem Rohmehl wird über den Zyklonabscheider 122 und eine Leitung 138 dem Karbonator 136 zugeführt, um Kohlendioxid abzuscheiden. An den Leitungen 132 und 138 ist jeweils eine Temperiervorrichtung 140, 142 wirksam.

Die erste Teilmenge von kalziniertem Rohmehl wird nach Durchlaufen der Abscheidevorrichtung 134 einem Drehrohrofen 144 zugeführt und in dem Drehrohrofen 144 mithilfe von Brennstoff 146 und Luft 148 zu Zementklinker umgewandelt. Dabei in dem Drehrohrofen 144 entstehendes Rauchgas wird über die Abscheidevorrichtung 134, den Karbonator 136 und die Kaskade von Zyklonabscheidern 102, 103, 104 als kohlendioxidarmes Rauchgas 150 abgeleitet. Letztlich wird alles Rohmehl 106, 128 dem Drehrohrofen 144 zugeführt. Das Rohmehl 106, 128 durchläuft mehrere Zyklen von Kalzinierung und Karbonatisierung im Kalzinator-Karbonator-Kreislauf. Bei jeden Durchlauf wird eine vorbestimmte Menge aus dem Kreislauf entnommen und der Abscheidestrecke und dann dem Drehrohrofen 144 zugeführt.

In der Abscheidevorrichtung 134 werden die erste Teilmenge von kalziniertem Rohmehl und Rauchgas aus dem Drehrohrofen 144 bei geeigneten Temperaturen intensiv in Kontakt gebracht, sodass problematische Komponenten in großem Umfang, beispielsweise wenigstens zu ca. 70 bis ca. 80%, mit dem kalzinierten Rohmehl reagieren. Auf diese Weise kann eine Anreicherung von S-, Cl- und Alkaliverbindungen im Karbonator 136 und im Kalzinator 108 minimiert bzw. kontrolliert und dadurch schädliche Auswirkungen dieser Komponenten auf den Calcium-Looping-Prozess deutlich vermindert werden. Ein S-, Cl- und Alkali-Kreislauf 152 bildet sich nur zwischen dem Drehrohrofen 144 und der Abscheidevorrichtung 134 aus.

Die Abscheidevorrichtung 134 weist einen Rauchgasauslass 154 auf, der dazu dient, eine Teilmenge von mit Schwefel, Halogenen und/oder Alkalien beladenem Rauchgas vor dem Kontakt mit kalzinertem Rohmehl abzuziehen. Die Abscheidevorrichtung weist einen Rohmehlauslass 156 auf, der dazu dient, eine Teilmenge von mit Schwefel, Halogenen und/oder Alkalien beladenem kalzinertem Rohmehl nach dem Kontakt mit Rauchgas abzuziehen. Damit können S, Cl und Alkalien aus dem S-, Cl- und Alkali-Kreislauf 152 entfernt werden.

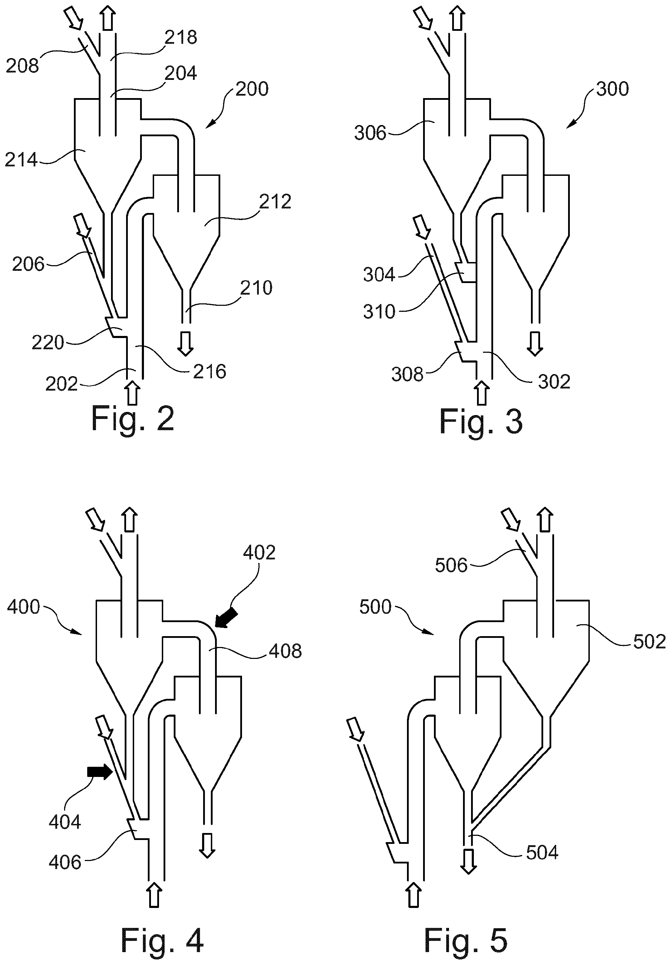

Fig. 2 zeigt eine Abscheidevorrichtung 200, wie Abscheidevorrichtung 124 gemäß Fig. 1, für Schwefel-, Halogen- und/oder Alkali-Verbindungen vor einem Karbonator-Kalzinator-Kreislauf mit Einbringung von kalziniertem Rohmehl aus einem Kalzinator zusammen mit rückgeführten Rohmehl aus einem als Zyklonabscheider 214 ausgeführten Fliehkraftabscheider vor Karbonator in eine Steigleitung 216.

Die Abscheidevorrichtung 200 weist einen ofenseitigen Rauchgaseinlass 202, einen karbonatorseitigen Rauchgasauslass 204, einen Rohmehleinlass 206 für eine erste Teilmenge von kalziniertem Rohmehl, einen ofenseitigen Rohmehlauslass 210, einen ersten als Zyklonabscheider 212 ausgeführten Fliehkraftabscheider und einen zweiten als Zyklonabscheider 214 ausgeführten Fliehkraftabscheider auf. Ein außerhalb der Abscheidevorrichtung 200 liegender Rohmehleinlass 208 dient dazu, eine zweite Teilmenge von kalziniertem Rohmehl dem Karbonator zuzuführen.

Der erste Zyklonabscheider 212 weist oben einen axialen Gasausgang, unten einen axialen Feststoffausgang und seitlich einen tangentialen Gas-Feststoff-Eingang auf. Der zweite Zyklonabscheider 214 weist oben einen axialen Gasausgang, unten einen axialen Feststoffausgang und seitlich einen tangentialen Gas-Feststoff-Eingang auf. Ein Steigrohr 216 führt von dem Rauchgaseinlass 202 zu dem tangentialen Gas-Feststoff-Eingang des ersten Zyklonabscheiders 212. Ein Steigrohr 218 führt von dem Rauchgasauslass 204 zu dem Karbonator.

Der Rohmehleinlass 206 und der Feststoffausgang des zweiten Zyklonabscheiders 214 laufen zusammen und münden im Folgenden in das Steigrohr 216. Ein Rohmehleinlaufkasten 220 dient dazu, einlaufendes Rohmehl gleichmäßig über einen Querschnitt des Steigrohrs 216 zu verteilen. Der außerhalb der Abscheidevorrichtung 200 liegende Rohmehleinlass mündet in das Steigrohr 218. Kalziniertes Rohmehl kann ohne weitere Kontrolle seiner Temperatur mit ca. 850°C bis ca. 950°C der Abscheidevorrichtung 200 zugeführt werden. Alternativ kann kalziniertes Rohmehl vor Zuführung zur Abscheidevorrichtung 200 auf Temperaturen zwischen von ca. 500°C bis ca. 850°C abgekühlt werden. Die Abkühlung kann beispielsweise durch eine Wärmeverschiebung zwischen rezykliertem Rauchgas des Kalzinators und kalziniertem Rohmehl oder auch durch Beimischung von frischem nicht kalziniertem Rohmehl erfolgen.

Die Abscheidevorrichtung 200 ermöglicht einen mechanisch intensiven und zeitlich und thermisch optimierten Kontakt zwischen kalziniertem Rohmehl und Rauchgas, wodurch eine Abscheidung von S-, Cl- und Alkaliverbindungen aus dem Rauchgas mit bestmöglicher Effizienz erfolgt. Eine Kontaktzeit zwischen kalziniertem Rohmehl und Rauchgas beträgt beispielsweise ca. 0,5s bis ca. 2s. Eine Temperatur in der Abscheidevorrichtung 200 beträgt beispielsweise ca. 700°C bis ca. 1.000°C.

Im Übrigen wird ergänzend insbesondere auf Fig. 1 und die zugehörige Beschreibung verwiesen.

Fig. 3 zeigt eine Abscheidevorrichtung 300 für Schwefel-, Halogen- und/oder Alkali-Verbindungen vor einem Karbonator-Kalzinator-Kreislauf mit voneinander gesonderter Einbringung von kalziniertem Rohmehl aus einem Kalzinator zusammen und rückgeführten Rohmehl aus einem Zyklon vor Karbonator in ein Steigrohr 302.

Der Rohmehleinlass 304 und der Feststoffausgang des zweiten Zyklonabscheiders 306 münden jeweils gesondert in das Steigrohr 302. Rohmehleinlaufkästen 308, 310 dienen dazu, einlaufendes Rohmehl gleichmäßig über einen Querschnitt des Steigrohrs 302 zu verteilen. Um zu hohe Temperaturen in der Abscheidevorrichtung 300 zu vermeiden, kann die Rückführung von kalziniertem Rohmehl am Ende der Abscheidevorrichtung 300 über den separaten Rohmehleinlaufkasten 310 erfolgen. Über den Rohmehleinlaufkasten 310 zugeführtes Rohmehl ist kälter als über den Rohmehleinlaufkasten 308 zugeführtes Rohmehl. Somit wird zunächst sehr heißes Rauchgas mit heißem Rohmehl aus dem Rohmehleinlaufkasten 308 gekühlt und dass kälteres Rauchgas mit kälteren Rohmehl aus dem Rohmehleinlaufkasten 310 weiter gekühlt. Damit kann eine lokal getrennte Abscheidung von Schadstoffen erreicht werden.

Im Übrigen wird ergänzend insbesondere auf Fig. 1 und Fig. 2 sowie die zugehörige Beschreibung verwiesen.

Fig. 4 zeigt eine Abscheidevorrichtung 400 für Schwefel-, Halogen- und/oder Alkali-Verbindungen vor einem Karbonator-Kalzinator-Kreislauf mit Einbringung von kalziniertem Rohmehl aus einem Kalzinator zusammen mit rückgeführten Rohmehl aus einem Zyklon vor Karbonator in eine Steigleitung und Zugabe von kaltem nicht kalzinierten Rohmehl 402, 404 zur Temperierung. Kaltes nicht kalziniertes Rohmehl 402, 404 kann vor einem Rohmehleinlaufkasten 406 und/oder in das Steigrohr 408 zugegeben werden.

Hierbei ermöglichen niedrigere Temperaturen des kalzinierten Rohmehls eine bessere Abscheidung vor allem von Cl-Verbindungen die erst bei Temperaturen in der Abscheidevorrichtung 400 unter ca. 900°C eingebunden werden können bzw. kondensieren. Derart niedrige Temperaturen können durch Temperierung des Rohmehls oder Beimischung von kaltem, nicht kalziniertem Rohmehl besser und zuverlässiger erreicht werden. Auch Alkalien und Schwefel lassen sich bei niedrigeren Temperaturen von ca. 600°C bis ca. 900°C besser abscheiden. Die Temperatur von Rauchgas und Rohmehl wird vorzugsweise derart eingestellt, dass kaum Karbonatisierung des kalzinierten Rohmehls auftritt, welches in den Drehrohrofen geführt wird, um eine negative Beeinflussung einer Umwandlung zu Zementklinker im Drehrohrofen zu vermeiden. Dazu sollte am Ende der Abscheidevorrichtung 400 eine Temperatur von ca. 700°C nicht unterschritten werden.

Im Übrigen wird ergänzend insbesondere auf Fig. 1 bis Fig. 3 sowie die zugehörige Beschreibung verwiesen.

Fig. 5 zeigt eine Abscheidevorrichtung 500 für Schwefel-, Halogen- und/oder Alkali-Verbindungen vor einem Karbonator-Kalzinator-Kreislauf mit Einbringung von kalziniertem Rohmehl aus dem Kalzinator in eine Steigleitung zur Temperierung ohne Rohmehl-Rückführung in die Abscheidevorrichtung 500. Der Feststoffausgang des zweiten Zyklonabscheiders 502 führt unmittelbar zum Rohmehlauslass 504, sodass das Rohmehl innerhalb der Abscheidestrecke nicht wie in den Abscheidevorrichtungen 200 und 300 teilweise rückgeführt wird.

### Bezugszeichen

- 100: Prozess
- 102: Zyklonabscheider
- 103: Zyklonabscheider
- 104: Zyklonabscheider
- 106: Rohmehl
- 108: Kalzinator
- 110: Brennstoff
- 112: Sauerstoff
- 114: Kohlendioxid
- 116: Zyklonabscheider
- 118: Zyklonabscheider
- 120: Zyklonabscheider
- 122: Zyklonabscheider
- 123: Leitung
- 124: Temperiervorrichtung
- 126: Temperiervorrichtung
- 128: Rohmehl
- 132: Leitung
- 134: Abscheidevorrichtung
- 136: Karbonator
- 138: Leitung
- 140: Temperiervorrichtung
- 142: Temperiervorrichtung
- 144: Ofen, Drehrohrofen
- 146: Brennstoff
- 148: Luft
- 150: Rauchgas
- 152: Kreislauf
- 154: Rauchgasauslass
- 156: Rohmehlauslass

- 200: Abscheidevorrichtung
- 202: Rauchgaseinlass
- 204: Rauchgasauslass
- 206: Rohmehleinlass
- 208: Rohmehleinlass
- 210: Rohmehlauslass
- 212: Zyklonabscheider
- 214: Zyklonabscheider
- 216: Steigrohr
- 218: Steigrohr
- 220: Rohmehleinlaufkasten

- 300: Abscheidevorrichtung
- 302: Steigrohr
- 304: Rohmehleinlass
- 306: zweiter Zyklonabscheider
- 308: Rohmehleinlaufkasten
- 310: Rohmehleinlaufkasten

- 400: Abscheidevorrichtung
- 402: Rohmehl
- 404: Rohmehl
- 406: Rohmehleinlaufkasten
- 408: Steigrohr
- 500: Abscheidevorrichtung
- 502: Zyklonabscheiders
- 504: Rohmehlauslass
- 506: Rohmehleinlass

## Patentansprüche

1. Verfahren zum Kontrollieren eines Schwefel-, Halogen- und/oder Alkalien-Kreislaufs (152) bei einem Herstellen von Zementklinker aus einem kalzinierten Rohmehl in einem Ofen (144) unter Bildung von Rauchgas, wobei in Rohmehl enthaltenes CaCO₃ in einem Kalzinator (108) unter Abscheidung von konzentriertem CO₂ zu CaO umgewandelt wird, um kalziniertes Rohmehl zu erhalten, eine erste Teilmenge von kalziniertem Rohmehl in den Ofen (144) überführt wird, CaO aus einer zweiten Teilmenge von kalziniertem Rohmehl in einem Karbonator (136) unter Reaktion mit in dem Rauchgas enthaltenen CO₂ wieder zu CaCO₃ umgewandelt wird und CaCO₃ aus dem Karbonator (136) in den Kalzinator (108) überführt wird, **dadurch gekennzeichnet, dass** bei einem Überführen der ersten Teilmenge von kalziniertem Rohmehl in den Ofen (144) in einer Abscheidevorrichtung (134, 200, 300, 400, 500) mit einem ofenseitigen Rauchgaseinlass (202), einem karbonatorseitigen ersten Rauchgasauslass (204), einem Rohmehleinlass (206, 304) und einem ofenseitigen ersten Rohmehlauslass (156, 210, 504) kalziniertes Rohmehl und Rauchgas miteinander in Kontakt gebracht werden, um Schwefel, Halogene und/oder Alkalien aus dem Rauchgas in dem kalzinierten Rohmehl zu binden.

2. Verfahren nach Anspruch 1, **dadurch gekennzeichnet, dass** kalzinertes Rohmehl vor dem Kontakt mit Rauchgas auf ca. 500°C bis ca. 900°C, insbesondere auf ca. 650°C bis ca. 850°C, temperiert wird.

3. Verfahren nach wenigstens einem der vorhergehenden Ansprüche, **dadurch gekennzeichnet, dass** Rauchgas vor dem Kontakt mit kalziniertem Rohmehl auf ca. 550°C bis ca. 750°C, insbesondere auf ca. 700°C, temperiert wird.

4. Verfahren nach wenigstens einem der vorhergehenden Ansprüche, **dadurch gekennzeichnet, dass** Rauchgas vor dem Kontakt mit kalziniertem Rohmehl durch Zugabe von kaltem Rohmehl (402, 404) temperiert wird.

5. Verfahren nach wenigstens einem der vorhergehenden Ansprüche, **dadurch gekennzeichnet, dass** mit Schwefel, Halogenen und/oder Alkalien beladenes kalziniertes Rohmehl aus Rauchgas abgeschieden und dem Ofen (144) zugeführt wird.

6. Verfahren nach wenigstens einem der vorhergehenden Ansprüche, **dadurch gekennzeichnet, dass** eine Teilmenge von mit Schwefel, Halogenen und/oder Alkalien beladenem Rauchgas vor dem Kontakt mit kalziniertem Rohmehl abgezogen wird.

7. Verfahren nach wenigstens einem der vorhergehenden Ansprüche, **dadurch gekennzeichnet, dass** eine Teilmenge von mit Schwefel, Halogenen und/oder Alkalien beladenem kalziniertem Rohmehl nach dem Kontakt mit Rauchgas abgezogen wird.

8. Vorrichtung zum Herstellen von Zementklinker aus einem kalzinierten Rohmehl unter Anwendung eines Verfahrens nach wenigstens einem der vorhergehenden Ansprüche, **dadurch gekennzeichnet, dass** die Vorrichtung einen Ofen (144), einen Kalzinator (108), einen Karbonator (136) und eine Abscheidevorrichtung (134, 200, 300, 400, 500) mit einem ofenseitigen Rauchgaseinlass (202), einem karbonatorseitigen ersten Rauchgasauslass (204), einem Rohmehleinlass (206, 304) und einem ofenseitigen ersten Rohmehlauslass (156, 210, 504) zum Binden von Schwefel, Halogenen und/oder Alkalien aus Rauchgas in kalzinierten Rohmehl aufweist.

9. Vorrichtung nach Anspruch 8 **dadurch gekennzeichnet, dass** die Abscheidevorrichtung (134) wenigstens einen dritten Rohmehleinlass für kaltes Rohmehl (402, 404) aufweist.

10. Vorrichtung nach wenigstens einem der Ansprüche 8 bis 9, **dadurch gekennzeichnet, dass** die Abscheidevorrichtung (134) wenigstens einen Rohmehleinlaufkasten (220, 308, 310, 406) aufweist, um zugeführtes Rohmehl zu verteilen.

11. Vorrichtung nach wenigstens einem der Ansprüche 8 bis 10, **dadurch gekennzeichnet, dass** die Vorrichtung eine Temperiervorrichtung (140) zum Temperieren von kalziniertem Rohmehl vor dem Kontakt mit Rauchgas und/oder zum Temperieren von Rauchgas vor dem Kontakt mit kalziniertem Rohmehl aufweist.

12. Vorrichtung nach wenigstens einem der Ansprüche 8 bis 11, **dadurch gekennzeichnet, dass** die Abscheidevorrichtung (134) einen zweiten Rauchgasauslass (154) aufweist, um eine Teilmenge von mit Schwefel, Halogenen und/oder Alkalien beladenem Rauchgas vor dem Kontakt mit kalziniertem Rohmehl abzuziehen.

13. Vorrichtung nach wenigstens einem der Ansprüche 8 bis 12, **dadurch gekennzeichnet, dass** die Abscheidevorrichtung (134) einen zweiten Rohmehlauslass (156) aufweist, um eine Teilmenge von mit Schwefel, Halogenen und/oder Alkalien beladenem kalziniertem Rohmehl nach dem Kontakt mit Rauchgas abzuziehen.

## Claims

1. Method for controlling a sulphur, halogen and/or alkali circuit (152) in the production of cement clinker from a calcined raw meal in a kiln (144) with the formation of flue gas, wherein CaCO₃ contained in raw meal is converted into CaO in a calciner (108) by separating concentrated CO₂ in order to obtain calcined raw meal, a first sub-quantity of calcined raw meal is transported into the kiln (144), CaO from a second sub-quantity of calcined raw meal is converted back to CaCO₃ in a carbonator (136) in a reaction with CO₂ contained in the flue gas, and CaCO₃ from the carbonator (136) is transported into the calciner (108), **characterised in that** when transporting the first sub-quantity of calcined raw meal into the kiln (144) in a separator (134, 200, 300, 400, 500) with a kiln-side flue gas inlet (202), a carbonator-side first flue gas outlet (204), a raw meal inlet (206, 304) and a kiln-side first raw meal outlet (156, 210, 504) calcined raw meal and flue gas are brought into contact with one another in order to bind sulphur, halogens and/or alkalis from the flue gas into the calcined raw meal.

2. Method according to claim 1, **characterised in that** calcined raw meal, prior to contact with flue gas, is brought to a temperature of about 500°C to about 900°C, in particular of about 650°C to about 850°C.

3. Method according to at least one of the preceding claims, **characterised in that** flue gas, prior to contact with calcined raw meal, is brought to a temperature of about 550°C to about 750°C, in particular of about 700°C.

4. Method according to at least one of the preceding claims, **characterised in that** the temperature of the flue gas is adjusted prior to contact with calcined raw meal by the addition of cold raw meal (402, 404).

5. Method according to at least one of the preceding claims, **characterised in that** calcined raw meal charged with sulphur, halogens and/or alkalis is separated from the flue gas and supplied to the kiln (144).

6. Method according to at least one of the preceding claims, **characterised in that** a sub-quantity of flue gas charged with sulphur, halogens and/or alkalis is removed prior to contact with calcined raw meal.

7. Method according to at least one of the preceding claims, **characterised in that** a sub-quantity of calcined raw meal charged with sulphur, halogens and/or alkalis is removed after contact with flue gas.

8. Device for producing cement clinker from a calcined raw meal by using a method according to at least one of the preceding claims, **characterised in that** the device has an kiln (144), a calciner (108), a carbonator (136) and a separator (134, 200, 300, 400, 500) with a kiln-side flue gas inlet (202), a carbonator-side first flue gas outlet (204), a raw meal inlet (206, 304) and a kiln-side first raw meal outlet (156, 210, 504) for binding sulphur, halogens and/or alkalis of flue gas into calcined raw meal.

9. Device according to claim 8, **characterised in that** the separator (134) has at least one third raw meal inlet for cold raw meal (402, 404).

10. Device according to at least one of claims 8 to 9, **characterised in that** the separator (134) has at least one raw meal infeed box (220, 308, 310, 406) for distributing supplied raw meal.

11. Device according to at least one of claims 8 to 10, **characterised in that** the device has a temperature control device (140) for adjusting the temperature of calcined raw meal prior to contact with flue gas and/or for adjusting the temperature of flue gas prior to contact with calcined raw meal.

12. Device according to at least one of claims 8 to 11, **characterised in that** the separator (134) has a second flue gas outlet (154), for removing a sub-quantity of flue gas charged with sulphur, halogens and/or alkalis before contacting with calcined raw meal.

13. Device according to at least one of claims 8 to 12, **characterised in that** the separator (134) has a second raw meal outlet (156) for removing a sub-quantity of calcined raw meal charged with sulphur, halogens and/or alkalis after contacting with flue gas.

## Revendications

1. Procédé de commande d'un circuit de soufre, d'halogène et/ou d'alcali (152) lors d'une fabrication de clinker de ciment à partir d'une farine crue calcinée dans un four (144) avec formation de gaz de fumée, dans lequel le CaCO₃ contenu dans la farine crue est transformé en CaO dans un calcinateur (108) avec séparation de CO₂ concentré, pour obtenir de la farine crue calcinée, une première quantité partielle de farine crue calcinée est transférée dans le four (144), le CaO provenant d'une deuxième quantité partielle de farine crue calcinée est à nouveau transformé en CaO₃ dans un carbonateur (136) par réaction avec le CO₂ contenu dans le gaz de fumée, et le CaCO₃ est transféré du carbonateur (136) dans le calcinateur (108), **caractérisé en ce que,** lors d'un transfert de la première quantité partielle de farine crue calcinée dans le four (144), la farine crue calcinée et le gaz de fumée sont mis en contact l'un avec l'autre dans un dispositif de séparation (134, 200, 300, 400, 500) comportant une entrée de gaz de fumée (202) côté four, une première sortie de gaz de fumée (204) côté carbonateur et une première sortie de farine crue côté four (156, 210, 504), afin de lier le soufre, les halogènes et/ou les alcalis provenant du gaz de fumée dans la farine crue calcinée.

2. Procédé selon la revendication 1, **caractérisé en ce qu'**avant le contact avec le gaz de fumée, la farine crue calcinée est tempérée à environ 500°C jusqu'à environ 900°C, en particulier à une température d'environ 650°C jusqu'à environ 850°C.

3. Procédé selon au moins l'une des revendications précédentes, **caractérisé en ce qu'**avant le contact avec la farine crue calcinée, le gaz de fumée est tempéré à environ 550°C jusqu'à environ 750°C, en particulier à environ 700°C,.

4. Procédé selon au moins l'une des revendications précédentes, **caractérisé en ce que** le gaz de fumée est tempéré avant le contact avec la farine crue calcinée par l'ajout de farine crue froide (402, 404).

5. Procédé selon au moins l'une des revendications précédentes, **caractérisé en ce que** de la farine crue calcinée chargée de soufre, d'halogènes et/ou d'alcalis est séparée du gaz de fumée et amenée dans le four (144).

6. Procédé selon au moins l'une des revendications précédentes, **caractérisé en ce qu'**une quantité partielle de gaz de fumée chargé en soufre, en halogènes et/ou en alcalis est soutirée avant d'être mise en contact avec de la farine crue calcinée.

7. Procédé selon au moins l'une des revendications précédentes, **caractérisé en ce qu'**une quantité partielle de farine crue calcinée chargée de soufre, d'halogènes et/ou d'alcalis est soutirée après le contact avec du gaz de fumée.

8. Dispositif de fabrication de clinker de ciment à partir d'une farine crue calcinée en mettant en œuvre un procédé selon au moins l'une des revendications précédentes, **caractérisé en ce que** le dispositif comprend un four (144), un calcinateur (108), un carbonateur (136) et un dispositif de séparation (134, 200, 300, 400, 500) comprenant une entrée de gaz de fumée (202) côté four, une première sortie de gaz de fumée (204) côté carbonateur et une première sortie de farine crue (156, 210, 504) côté four pour lier le - soufre, les halogènes et/ou les alcalis du gaz de fumée dans la farine crue calcinée.

9. Dispositif selon la revendication 8, **caractérisé en ce que** le dispositif de séparation (134) présente au moins une troisième entrée de farine crue pour de la farine crue (402, 404) froide.

10. Dispositif selon au moins l'une des revendications 8 à 9, **caractérisé en ce que** le dispositif de séparation (134) présente au moins une boîte d'entrée de farine crue (220, 308, 310, 406) pour répartir la farine crue amenée.

11. Dispositif selon au moins l'une des revendications 8 à 10, **caractérisé en ce que** le dispositif comporte un dispositif de régulation de température (140) pour tempérer de la farine crue calcinée avant le contact avec du gaz de fumée et/ou pour tempérer du gaz de fumée avant le contact avec la farine crue calcinée.

12. Dispositif selon au moins l'une des revendications 8 à 11, **caractérisé en ce que** le dispositif de séparation (134) présente une deuxième sortie de gaz de fumée (154) pour soutirer une quantité partielle de gaz de fumée chargé en soufre, en halogènes et/ou en alcalis avant le contact avec la farine crue calcinée.

13. Dispositif selon au moins l'une des revendications 8 à 12, **caractérisé en ce que** le dispositif de séparation (134) présente une deuxième sortie de farine crue (156) pour soutirer une quantité partielle de farine crue calcinée - chargée en soufre, en halogènes et/ou en alcalis après le contact avec le gaz de fumée.
